# EUROPEAN PATENT SPECIFICATION

(11) **EP 3 692 313 B1**
(45) Date of publication and mention of the grant of the patent: **13.04.2022**
(21) Application number: 18782721.7
(22) Date of filing: 03.10.2018
(51) Int. Cl.: F24S 70/00

(54) **SOLAR THERMAL ABSORBER AND RELATED METHODS**
SOLARTHERMISCHER ABSORBER UND ZUGEHÖRIGE VERFAHREN
ABSORBEUR THERMIQUE SOLAIRE ET PROCÉDÉS ASSOCIÉS

(30) Priority: 04.10.2017 DK PA201700555
(43) Date of publication of application: 12.08.2020
(73) Proprietor: Heliac ApS, 2970 Hørsholm (DK)
(72) Inventor: PRANOV, Henrik, 3060 Espergaerde (DK); MATSCHUK, Maria, 2800 Bagsværd (DK)
(74) Representative: Beck Greener LLP
(86) International application number: PCT/EP2018/076923
(87) International publication number: WO 2019/068773

(56) References cited:
- CA-A- 1 196 223
- CN-A- 101 666 552
- DE-A1- 2 361 352
- DE-A1- 10 307 540
- DE-A1-102010 034 901
- FR-A- 1 314 477
- US-A- 4 328 790
- US-A- 4 360 005
- US-A- 4 392 481
- US-A- 4 426 995
- US-A1- 2017 123 122

## Description

### FIELD OF THE INVENTION

In aspects, the present invention relates a solar thermal absorber and to a method of manufacturing a solar thermal absorber. Other aspects relate to use of a solar thermal absorber in methods of heating a volume of air, for prevention or dispersion of fog, for prevention of ice formation or ice or snow removal, for prevention of frost damage to crops or plants, and for preventing mould or mildew formation.

### BACKGROUND OF THE INVENTION

To efficiently absorb sunlight, a surface needs to have a high absorption coefficient. However, a high absorption coefficient over the full radiation spectrum will result in increased radiation loss when the surface reaches a higher temperature than the ambient surroundings. Wavelength selective surfaces are surfaces where the absorption coefficient varies with the wavelength. For solar absorption, the absorption coefficient is typically high (>0.8) in the visible and NIR spectrum and low (<0.2) in the FIR spectrum (5-20 µm), corresponding to the wavelengths of blackbody radiation at ambient and slightly increased temperatures.

Wavelength selective surfaces has been known for a long time, and can be realized by many different means [1]. Two main types are used, one where a visible spectrum absorber being transparent to FIR radiation is deposited on a metal surface which reflects FIR radiation, and a structure based type, where a materials surface structure will ensure selective absorption of visible light and reflection of FIR radiation.

However, most of these structures are relatively expensive to fabricate, are not flexible and have a limited throughput in production.

What we disclose here is a design and manufacturing method of such a wavelength selective surface which consists of low-cost materials, are flexible and can be mass-produced.

These have a variety of uses as solar absorbers.

Whilst solar heat collector panels are known which have insulating air pockets, e.g. from GB2457701A**,** these typically have little or no effective means to control the way that solar radiation is absorbed or adapt it to different requirements.

DE10307540A1 describes a solar powered heating system, which uses heated air as the heat carrier medium. It has an absorber in the form of a perforated plastic film with an absorbency of at least 80% in the visible wavelength range. Absorption chambers filled with gas are disposed on the sides of the absorber.

US4392481 relates to an active solar collector comprising an absorber and glazing deployed over the absorber. The glazing is spaced away from the absorber during operation of the collector, and is brought into substantial contact with absorber during stagnation to increase re-emittance and thereby to maintain lower temperatures when the collector is not in operation.

### OBJECT OF THE INVENTION

It may be seen as an object of the invention to provide an improved method for maintaining solar absorbers by industrial polymer foil made by industrial roll-to-roll manufacturing processes.

It may be seen as a further object of the invention to reduce cost of solar absorbers.

It may be seen as a further object of the invention to provide a solar absorber that is soft and flexible.

It may be seen as a further object of the invention to simplify the deployment of the solar absorber field.

It may be seen as a further object of the invention to lower cost of solar absorbers.

It may be seen as an object of the invention to provide an improved solar absorber that can be dynamically altered to become a heat emitter.

It may be seen as an object of the invention to provide a method for prevention or dispersion of fog using the improved solar absorber that can be dynamically altered to become a heat emitter.

It may be seen as an object of the invention to provide a method for prevention of frost damage to crops using the improved solar absorber that can be dynamically altered to become a heat emitter.

### DESCRIPTION OF THE INVENTION

Aspects of the present invention are defined in relation to the appended independent claims.

In a first aspect, the present invention relates to a solar thermal absorber through which a heat transfer fluid can circulate to be heated by solar radiation incident on an upper surface of the absorber, the absorber comprising overlying layers of flexible foil sealingly joined together at joins to form plural enclosures between respective co-joined layers,
wherein a first enclosure provides a passageway for a heat transfer fluid to circulate, and
wherein a second enclosure is capable of being selectively filled with a gas, the second enclosure being above and overlying the first enclosure such that solar radiation passes through the second enclosure to reach the upper layer forming the fluid passageway, wherein the second enclosure (42) is capable of being at least partly evacuated of the gas, thus increasing the convective heat transfer between the circulating fluid and the ambient surroundings,
wherein the upper layer forming the fluid passageway comprises a wavelength selective flexible foil comprising:
   a polymer layer with a surface nanostructure; and
   a metal layer conformally coating the surface nanostructure of said polymer layer and facing away from the fluid passageway,
   such that the absorption coefficient varies with the wavelength, having relatively high absorption coefficient in the visible and NIR spectrum and relatively low absorption coefficient in the FIR spectrum.

The wavelength selective flexible foil may be characterized by the absorption of visible light normal to the surface from the side of the said metal layer is at least 70%, and the absorption of far infrared radiation in the range of 5-10 µm from the side of the said metal layer is below 30%. Also, other materials can be used for the upper layer of the fluid passageway that are reflective to far infrared radiation, but transparent (instead of absorbing) to visible and near infrared light.

The use of a flexible, wavelength selective flexible foil joined together with other flexible foils achieves a low cost, simple to manufacture solar thermal absorber that can be simply transported, stored and deployed. The second enclosure can be selectively filled with gas, i.e. inflated, to insulate the fluid passageway to reduce radiation and convection losses when the fluid is being heated by solar radiation. The wavelength selective flexible foil is effective in reducing losses through radiation, whilst absorbing sunlight incident on the upper surface of the device which passes through the second enclosure and is absorbed by the wavelength selective flexible foil and converted into heat in the circulating fluid. The circulating fluid can store the heat for future use or to be converted into other forms of energy, as required.

The absorber may be manufactured simply and inexpensively by bonding the wavelength selective flexible foil to another flexible foil layer to make the first enclosure providing the fluid passageway, and then bonding a third layer of flexible film material to the top of the wavelength selective foil to form the enclosure overlaying the fluid passageway. Thus, in embodiments, only three layers of material selectively bonded together are needed to form the enclosures.

Conventional selective solar absorbers comprise a metal vessel with a selective coating, which simultaneously absorbs sunlight at high efficiency and prevents blackbody radiation at the operation temperature of the absorber, typically 50-95C. However, these solar absorbers are slow to produce and install due to the metalwork and coating processes involved. These problems are mitigated by the preferred embodiments of the present invention by providing a solar thermal absorber comprising plural flexible foil layers.

The second enclosure is capable of being at least partly evacuated of the gas, thus increasing the convective heat transfer between the said circulating fluid and the ambient surroundings. This allows the solar thermal absorber to be reconfigured dynamically to be a more efficient emitter of heat energy from the circulating fluid. In applications, heat energy absorbed from sunlight is stored via the circulating fluid for future use when the temperature of the fluid is higher than ambient air temperature and it is desired to emit the heat back to the environment via the solar absorber. For instance, heat is stored during times of sunlight, and "reclaimed" at night when temperatures are lower or some other relevant condition is met. Thus, in the first scenario, it is desirable for the solar absorber to minimise heat lost from the circulating fluid, whereas in the second scenario is desirable for the solar absorber to become a more efficient radiator of stored heat. The solar absorber can be reconfigured dynamically by adjusting the amount of gas in the second enclosure to adjust the ability of the device to radiate heat.

Thus, with the second layer inflated, the absorber is wavelength selective and adapted to absorb solar energy, but with the second layer evacuated, the device "switches" to an efficient radiator configuration and effectively stops being wavelength selective. Direct thermal contact between the upper layer foil and the wavelength selective foil may be created, greatly increasing both the convective and radiative heat losses, effectively turning the solar absorber into a thermal emitter, provided that the circulating liquid has a temperature above ambient temperature. The upper layer foil itself may have a high thermal emissivity to both irradiate at a high level, and have greatly increased convection to the ambient air.

This technology has a multitude of useful applications, as described herein, such as avoiding frost, fog, etc, where in prior art schemes it is commonplace to burn fossil fuels to mitigate these issues.

In an embodiment, a third enclosure is capable of being filled with gas, the third enclosure overlying and being below the first enclosure. Thus, the solar absorber has an insulating air pocket on both sides of the fluid passageway, minimising heat losses. The second and third enclosures may be individually inflatable and/or individually capable of being evacuated, e.g. by having separate ports or a switchable valve.. The third enclosure may remain filled with gas when the second enclosure is evacuated of gas, in order to control the release of heat in an upwards direction.

The third enclosure may be formed by bonding a flexible film to the bottom layer forming the fluid passageway. Thus, in embodiments, only four layers of material selectively bonded together are needed to form the enclosures.

In an embodiment, the third enclosure is capable of being at least partly evacuated of the gas, thus increasing the convective heat transfer between the said circulating fluid and the ambient surroundings. Thus, the solar absorber can be made to more efficiently radiate heat from its bottom surface by evacuating air from the third enclosure. This may be useful where it is desirable to direct the heat in both directions or alternatively, only the third enclosure is evacuated of gas, so the heat is emitted to the environment in a downwards direction.

The fluid passage way may be configured as a plurality of channels by appropriate joins between the layers forming the first enclosure. Similarly, the second and/or third enclosures can be configured as a plurality of channels by appropriate joins between the layers forming those enclosures, e.g. 4 or more generally parallel channels. Thus, in cross section, the solar absorber may be given the structure of an array of cells, where the joins between cells in one layer of cells do not coincide with the joins of an adjacent layers, adding structural rigidity, and allowing large the solar absorber to occupy a large area without fluid pressure becoming excessive and minimising overall height to promote effective heat absorption by the circulating fluid. The cells in at least one layer may be offset from the cells in the next layer, to increase structural rigidity. The enclosures may have internal manifolds linking the inlet/outlet ports to the plurality of channels. Alternatively or additionally, each channel may have its own inlet/outlet port, which can be connected externally to a manifold or separate pumps. Thus, large areas can be covered by a solar absorber of this design. In embodiments, the solar absorber can be 10 m, or 50 m or more long and/or wide. In typical applications, it is expected that a size (distance between seams) from 1 cm to 10 cm, and maybe up to 20 cm may be preferred. Thus, each channel has a cross section of between approx. 3cm² and 60cm². The main considerations are that a given flow of heat transfer fluid must be upheld to remove the absorbed energy from the system. This requires a pressure which depends on the "tube" size. The larger the tube, the smaller the pressure. However, large tubes will contain a lot of fluid which is impractical, and in the case of one tube, it may become unstable. With a larger tube, smaller heat diffusion will take place from the edge of the tube, where the flow is low, and hence will the surface temperature be unnecessarily high.

In an embodiment, the wavelength selective foil comprises refractive index gradient anti reflective nanostructures.

In an embodiment, the lower layer of the first enclosure is metalized. Thus, this helps avoid heat loss from the circulating fluid through the lower surface of the fluid passageway.

In an embodiment, the lowermost layer is resistant to wear due to ground contact. For example, it may receive a wear resistant coating or be bonded to a wear resistant substrate to enhance the robustness of the overall device during deployment.

In an embodiment, a further enclosure is provided at the bottom of the solar thermal absorber capable of being filled with liquid to anchor the solar thermal absorber in use. This can help avoid the solar absorber being affected by wind and reduce or eliminate the need to tether or otherwise fix the absorber to the ground.

In an embodiment, the upper layer of the second enclosure comprises a UV absorber. Thus, the incident sunlight on the top surface is absorbed and transmitted onto the wavelength selective layer, which transforms the solar radiation to heat energy transmitted to the circulating fluid

In an embodiment, the solar absorber is capable of being folded by way of the flexible foil layers for storage or transportation when not in use.

Thus, in aspects of the present invention, it is proposed to first create a wavelength selective material by coating a nanostructured polymer foil with a thin layer of metal, e.g. aluminum, then use this material to create a solar absorber device, and then to use this device to collect heat during sunlight, store it in the ground, and extract the heat from the ground later on demand where the solar absorber can dynamically be altered to become a thermal emitter, which will heat the surroundings, e.g. to prevent or disperse fog or to prevent freezing of crops that are sensitive to frost.

Other aspects of the invention relate to methods of manufacturing solar absorber device as described above.

The inventors have observed that otherwise reflective materials such as aluminum can become absorbent by structuring the surface. However, most structures will increase absorption significantly in both the visible, NIR and FIR spectrum. To solve this, we have deployed special nanostructures with precise specific dimension to allow for selective absorption in the visible and NIR wavelength range. Using such structures, simultaneous absorption on the visible range of above 0.8 and emission of less than 0.2 in the FIR range has been obtained. Furthermore, these structures have been produced using roll-to-roll nano-extrusion coating and subsequent roll-to-roll metallization using aluminum evaporation.

The characteristics of the used nanostructures are that the (height) Rz value is low, typically less than 500 nm to 1000 nm, that the spacing in the plane of the structures are less than 300 nm to 500 nm, and the filling factor normal to the plane changes in a continuous way (as opposite to e.g. binary/two-level structures, where the filling factor changes discretely between different levels).

An embodiment relates to a wavelength selective flexible foil comprising:
- A first polymer layer with a surface nanostructure
- A metal layer conformally coating the surface nanostructure of said first polymer layer
- characterized by the absorption of visible light normal to the surface from the side of the said metal layer is at least 70%, more preferably more than 80% and most preferably more than 90%
- and further characterized by the absorption of far infrared radiation in the range of 5-10 µm from the side of the said metal layer is below 30%, more preferable below 25% and most preferably below 20%.

An embodiment furthermore relates to a wavelength selective flexible foil where the said nanostructures have a characteristic length in the layer directions of less than 1000 nm, more preferably less than 600 nm, more preferably less than 500 nm, even more preferably less than 400 nm and most preferably less than 300 nm, and a height between 50 nm and 1000 nm, more preferably between 100 nm and 500 nm, and most preferably between 200 nm and 400 nm, and a filling factor from the top of the structures to the bottom that increases continuously from 0 to 1.

An embodiment furthermore relates to a wavelength selective flexible foil where the said metal layer comprises aluminum.

An embodiment furthermore relates to a wavelength selective flexible foil where the aluminum layer has a thickness of less than 100 nm, more preferably less than 75 nm and most preferably less than 50 nm.

An embodiment furthermore relates to a wavelength selective flexible foil where the said nanostructures have an aspect ratio above 0.5, more preferably more than 0.75 and most preferably above 1.

An embodiment furthermore relates to a wavelength selective flexible foil where the said first polymer layer comprises a thermoplastic polymer

An embodiment furthermore relates to a wavelength selective flexible foil where the said first polymer layer comprises a carrier foil of a flexible, non-elastic polymer and a second polymer layer, comprising a nanostructured flexible, elastic and semi crystalline polymer.

An embodiment furthermore relates to a wavelength selective flexible foil where the said first polymer layer comprises PET (polyethylene terephthalate), and the second polymer layer comprises PP (polypropylene).

An embodiment furthermore relates to a wavelength selective flexible foil where the said first polymer layer is coated with the second polymer layer using extrusion coating.

An embodiment furthermore relates to a method for manufacturing the said wavelength selective flexible foil where the method comprises extrusion coating of the said nanostructured layer with a subsequent metallization process comprising either thermal evaporation deposition or sputtering deposition.

An embodiment furthermore relates to a solar thermal absorber comprising a wavelength selective flexible foil.

An embodiment furthermore relates to a solar thermal absorber where the said wavelength selective flexible foil is part of a device for heating a circulating fluid.

An embodiment furthermore relates to a solar thermal absorber that comprises several layers of flexible foil including the wavelength selective flexible foil being partly adhered to each other, forming enclosures.

An embodiment furthermore relates to a solar thermal absorber where the said enclosures may be filled with a circulating fluid or be filled with a non-circulated fluid.

An embodiment furthermore relates to a solar thermal absorber characterized by having at least 3 layers of said flexible foils being partly adhered to each other, thus forming between them at least 2 layers of enclosures, the upper enclosure being able to be filled with gas and the lower enclosure being able to be filled with a circulating fluid, and further characterized by the upper layer of the lower enclosure with the said circulating fluid comprising said wavelength selective flexible foil where the said metal faces away form said circulating fluid.

An embodiment furthermore relates to a solar thermal absorber characterized by having at least 4 layers of said flexible foils being partly adhered to each other, thus forming between them at least 3 layers of enclosures, and the lower and upper enclosure being able to be filled with stationary gas and the middle enclosure being able to be filled with circulating fluid, and further characterized by the upper layer of the middle enclosure with the said circulating fluid comprising said wavelength selective flexible foil where the said metal faces away form said circulating fluid.

As discussed above, a flexible polymer layer with nano-structure coated with aluminium is a preferred way of providing a wavelength selective flexible foil However, other types of wavelength selective flexible foil may be used.

An embodiment furthermore relates to a solar thermal absorber where the upper and lower layers are capable of being at least partly evacuated from the gas, thus increasing the convective heat transfer between the said circulating fluid and the ambient surroundings.

The solar thermal absorber may comprise a pump connected to the middle enclosure to circulate fluid and/or a pump connected to the upper or lower enclosures to inflate/evacuate air.

An embodiment furthermore relates to a solar thermal absorber where the said flexible foil forming the upper layer comprises refractive index gradient anti reflective nanostructures.

An embodiment furthermore relates to a solar thermal absorber where the said flexible foil forming the lower layer of the middle enclosure is metalized.

An embodiment furthermore relates to a solar thermal absorber where the said flexible foil forming the lower layer of the lower enclosure is resistant to wear due to ground contact.

An embodiment furthermore relates to a solar thermal absorber where the said flexible foil forming the upper layer of the upper enclosure comprises a UV absorber.

The invention furthermore relates to a method of absorbing energy from sunlight characterized by using a solar thermal absorber as claimed in claim 1, comprising a wavelength selective flexible foil, characterized by the circulating fluid being water or an aqueous solution, the gas being air, and at least part of the absorbed energy in the said sunlight absorbed by said circulating fluid being deposited in the ground. The invention furthermore relates to a method of heating a volume of air by use of a solar thermal absorber, absorber as claimed in claim1, characterized by the lower enclosure being filled with a stationary gas, the middle enclosure being filled with circulating fluid at an inlet temperature higher than the ambient temperature, and the upper enclosure being evacuated, thus being in thermal contact with the middle enclosure comprising the circulating fluid.

The invention furthermore relates to a method for prevention or dispersion of fog using the solar thermal absorber as claimed in claim 1, characterized by the following steps:
- deploying the solar thermal absorber
- using said deployed solar thermal absorber to absorb energy during sunlight and store at least part of this energy in a thermal storage, preferably the ground
- during periods with fog or risk thereof, circulating a fluid through the energy storage reaching a temperature higher than the ambient air temperature and subsequently through the deployed solar thermal absorber

An embodiment furthermore relates to a method for prevention or dispersion of fog where the said upper layer of said solar thermal energy absorber is at least partly evacuated from gas.

An embodiment furthermore relates to a method for prevention or dispersion of fog deployed at an airport, harbor, railway, motor vehicle way, sport field or an agricultural facility.

The invention furthermore relates to a method for prevention of ice formation or ice or snow removal characterized by using a solar thermal absorber as claimed in claim 1, comprising
a wavelength selective flexible foil, characterized by the circulating fluid being water or an aqueous solution, the gas being air, and at least part of the absorbed energy in the said sunlight absorbed by said circulating fluid being deposited in the ground on top of which the formation of ice or snow is to be prevented, by heating the surface of the ground, thus melting the said snow or ice.

The invention furthermore relates to a method for prevention of ice or frost formation characterized by using a solar thermal absorber as claimed in claim 1, comprising a
wavelength selective flexible foil, characterized by the circulating fluid absorbing energy from the ground and thereby having a higher temperature than ambient when circulated in said solar thermal absorber.

The invention furthermore relates to a method for prevention of ice or frost formation characterized by using a solar thermal absorber as claimed in claim 1, comprising a
wavelength selective flexible foil, characterized by the upper layer being at least partly evacuated.

The invention furthermore relates to a method for prevention of frost damage to crops or plants, characterized by using a solar thermal absorber 2. as claimed in claim 1, comprising a
wavelength selective flexible foil, and at least part of the during sunlight absorbed energy in the said sunlight absorbed by said circulating fluid being deposited in the ground, and subsequently upon the need for preventing said damage to crops or plants, circulating fluid from the ground at a higher temperature to the said solar thermal absorber present in a lower temperature ambient surrounding, thereby heating the ambient surrounding adequately through means of combined heat convention and thermal radiation to prevent frost damage to said crops or plants.

By polymer foil is meant a flexible sheet of polymer materials, comprising of one or more layers of polymeric materials. The polymer foil may contain non-polymeric parts, such as thin, reflective metal layers, UV stabilizers or other additives. The thickness of polymer foils is typically in the range of 20 to 200 µm, but thinner or thicker foils may be found.

By wavelength selective is meant a surface with different absorption/emission coefficients for electromagnetic radiation in the visible/near-IR and the far-IR spectrums, respectively. In this context is meant a material which has a high absorption coefficient in the visible/near-IR spectrum in order to absorb as much sunlight as possible, and a low absorption coefficient in the far-IR spectrum to emit as little thermal radiation as possible.

By surface nanostructure is meant a topographical feature of the surface with a repetition length or characteristic length scale of 1000 nm or less.

By filling factor is meant the relative area at a cross section at a given height that is solid material, with the remainder being air or different material.

By elastic and non-elastic polymer is meant polymers which can deform elastically (length deformation) of more and less than 5%, respectively without breaking or being plastically/permanently deformed.

By enclosure is meant a volume to which there is only access to through one or several inlets and outlets. An example is two foils glued together at the sides in their length direction, thus forming a long tube, where access to the enclosed volume can be made at the two ends of the foil, for inlet and outlet, respectively.

By upper and lower is meant the side facing the sun and the ground during use of the solar absorber, respectively.

By inflated is meant that an enclosure is filled with gas to increase its volume, but not necessarily fill the enclosure to its maximum volume.

By evacuated is meant that an enclosure is drained of gas to decrease its volume, but not necessarily drain all gas from the enclosure.

By refractive index gradient anti reflective nanostructures is meant a topographical surface structuring using nanostructures to decrease the surface reflection coefficient of the said surface.

By solar thermal absorber is meant a device whose primary function is to absorb sunlight and convert the energy therein to heat by the use of a carrier fluid.

By partly adhered is meant two foils that are overlaying, but only being attached in specific part, e.g. by two parallel lines, thereby creating an enclosed volume between the two lines, with open connection in each end where circulating water can enter or exit.

By extrusion coating is meant the process of coating a foil in a continuous roll-to-roll process, as described in the literature, see e.g. [Gregory, B. H., "Extrusion Coating", Trafford, 2007, ISBN 978-1-4120-4072-3].

All of the features described may be used in combination in so far as they are not incompatible therewith.

### BRIEF DESCRIPTION OF THE FIGURES

The method and apparatus according to the invention will now be described in more detail with regard to the accompanying figures. The figures show one way of implementing the present invention and is not to be construed as being limiting to other possible embodiments falling within the scope of the claims.
Figure 1 shows a cross section view of a wavelength selective foil according to an embodiment of the present invention.
Figure 2 shows the effect of the foil relative to sunlight.
Figure 3 shows a cross sectional view an example of a device incorporating the foil of Figure 1 used to heat a circulating fluid according to an embodiment of the present invention.
Figure 4 shows another example of a device incorporating the foil of Figure 1 used to heat a circulating fluid according to an embodiment of the present invention.
Figure 5 shows a configuration of the solar absorber of Figure 4 in which the configuration has been dynamically changed to become an efficient transmitter.
Figure 6 shows another example of a solar absorber according to an embodiment of the present invention.
Figures 7a and 7b shows cross sections of the absorber of Figure 4 placed on the ground in used, and respectively the two typical use situations of absorbing solar and transmitting heat along with the flow of energy in the two situations.
Figure 8 shows a plan view of the absorber of Figure 4 from the top, showing the joins between layers.
Figure 9 shows a system incorporating the absorber of Figure 4.

### DETAILED DESCRIPTION OF AN EMBODIMENT

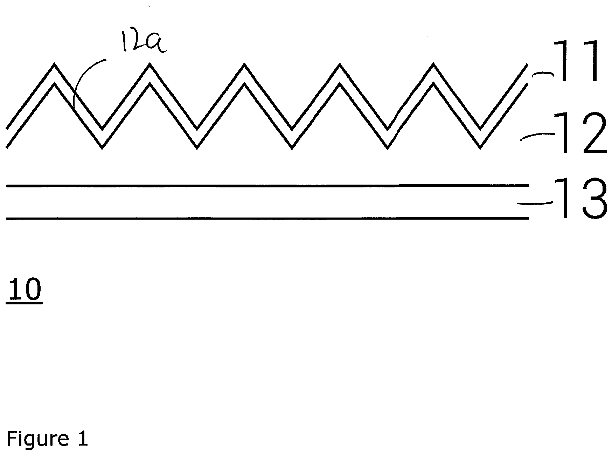

Figure 1 shows a cross section view of a wavelength selective foil 10, where a carrier foil 13 is coated in a nanoextrusion coating process with a thermoplastic polymer 12, forming a nanostructured polymer surface 12a. This surface is subsequently coated with a conformal aluminum coating 11. The resultant foil 10 is flexible. As described above, the nanostructures have precise specific dimension to allow for selective absorption in the visible and NIR wavelength range. Using such structures, simultaneous absorption on the visible range of above 0.8 and emission of less than 0.2 in the FIR range has been obtained. Furthermore, these structures may be produced using roll-to-roll nano-extrusion coating and subsequent roll-to-roll metallization using aluminum evaporation.

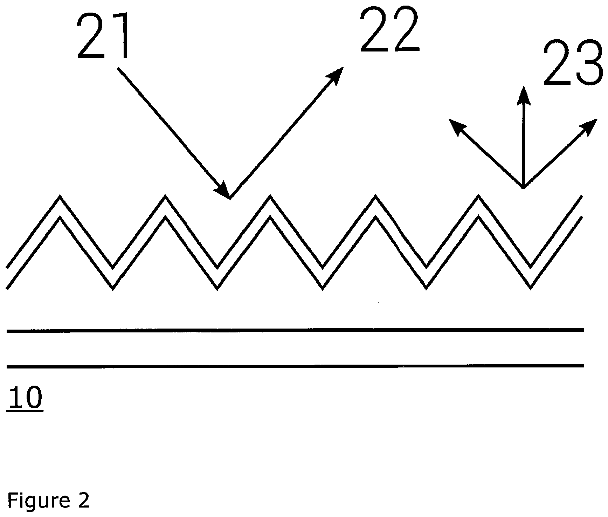

Figure 2 shows the effect of the foil surface relative to light, where sunlight 21 is being absorbed at a high efficiency / low reflectance 22, and thermal radiation is emitted at a low intensity 23.

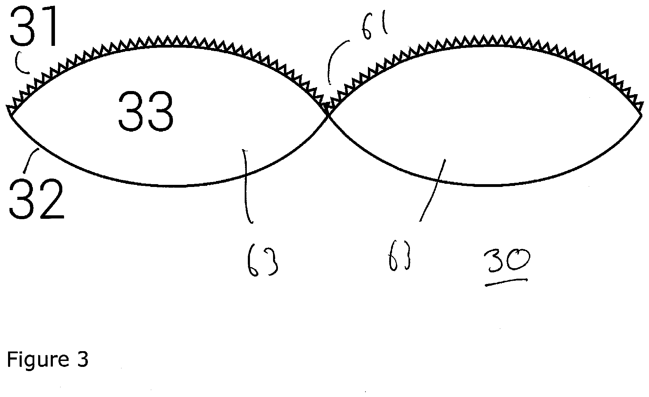

Figure 3 shows the cross sectional view of a device used to heat a circulating fluid which incorporates a layer 31 of the wavelength selective foil 10. In the present example the fluid is a liquid, such as water or an aqueous solution. The wavelength selective foil layer 31 is joined 61 to another flexible foil 32 to form an enclosure 33, where the circulating liquid can stream. Upon sunlight incident on the top surface, the wavelength selective surface absorbs the light which is converted to heat, which in turn is transferred to the liquid through convection.

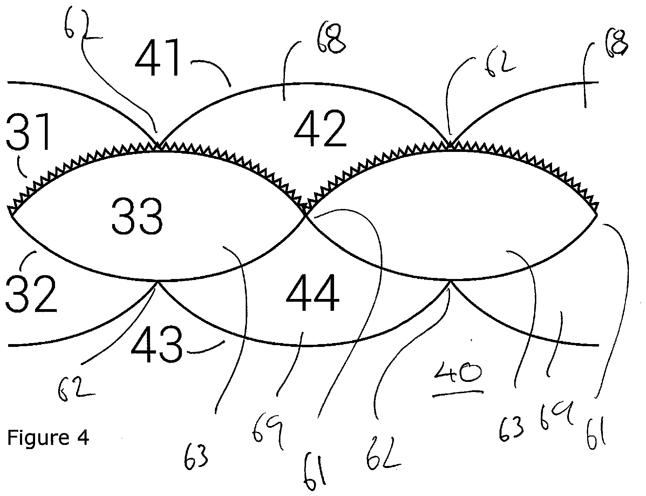

Figure 4 shows another embodiment of the invention, where the middle layer where liquid circulate 31-33 is supplemented with an upper layer flexible foil 41, forming a top layer enclosure 42, and a bottom layer flexible foil 43 forming a bottom layer enclosure 44. Thus, plural spaced apart joins 62 are created between the upper layer flexible foil 41 and the wavelength selective foil 31 to form an enclosure 42 comprising a series of parallel channels 68, and likewise, plural spaced apart joins 62 are created between the lower flexible foil 43 and the bottom layer 32 of the fluid passageway, to form a lower enclosure 44 comprising a series of parallel channels 69. The function of the top and bottom layer enclosures 42,44 is to thermally insulate the circulating liquid 33 in the middle enclosure, and will typically be filled with a stationary gas, such as air, in order to reduce convective losses. The joins 62 forming the upper and lower enclosure may be laterally offset from the joins 61 forming the liquid passageway to help stiffen the device when inflated with gas.

Any suitable means can be used to join the flexible foil layers. For instance, layers can be welded using heat or chemical welding, or adhesives used.

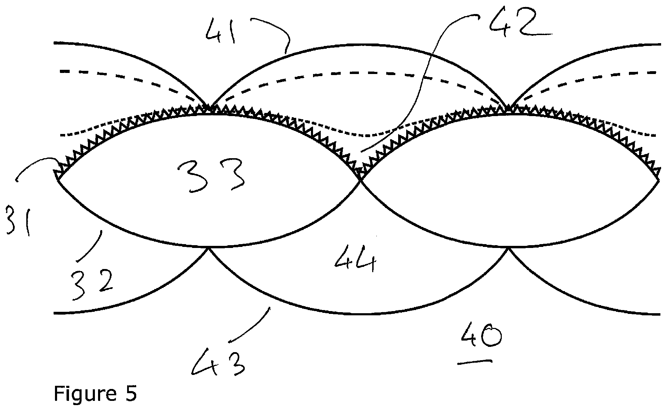

Figure 5 shows a further feature of the solar absorber 40, namely the ability to dynamically change the absorber to become an efficient transmitter. When used as absorber the top layer enclosure is inflated (solid line), providing high thermal insulation. By partly evacuating the gas from the upper layer enclosure (large dashed line), the thermal insulation can be reduced, and by further evacuation of the upper enclosure (small dashed line), direct thermal contact between the upper layer foil and the wavelength selective foil is created, greatly increasing both the convective and radiative heat losses, effectively turning the solar absorber into a thermal emitter, provided that the circulating liquid has a temperature above ambient temperature. The upper layer foil itself has a high thermal emissivity (typical polymer foils are close to 0.9), and will therefore both irradiate at a high level, and have greatly increased convection to the ambient air. In some applications, the ability to move heat from the liquid to the air is important, e.g. if dispersing fog or preventing the temperature to decrease under a given level (e.g. anti-frost systems for agricultural use).

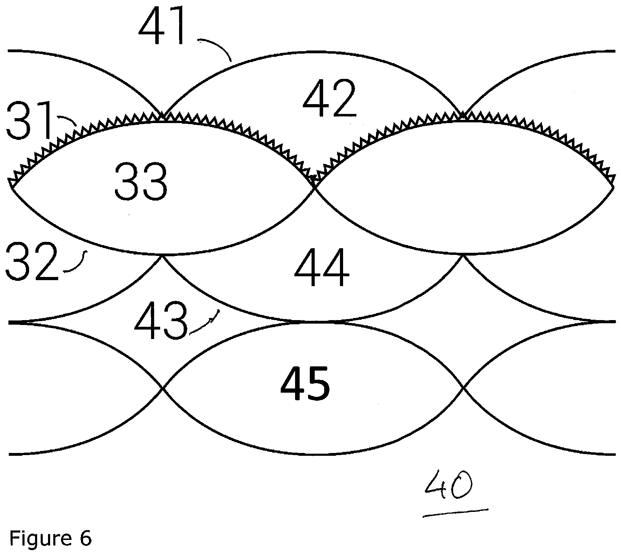

Figure 6 shows a further feature of the solar absorber, namely the option to make a further bottom anchoring enclosure 45 from one or more further layers of flexible foil which other substrate that can be joined to the bottom of the solar absorber and, which will increase the mechanical stability of the device against e.g. wind, by allowing the anchoring layer to be filled with e.g. water.

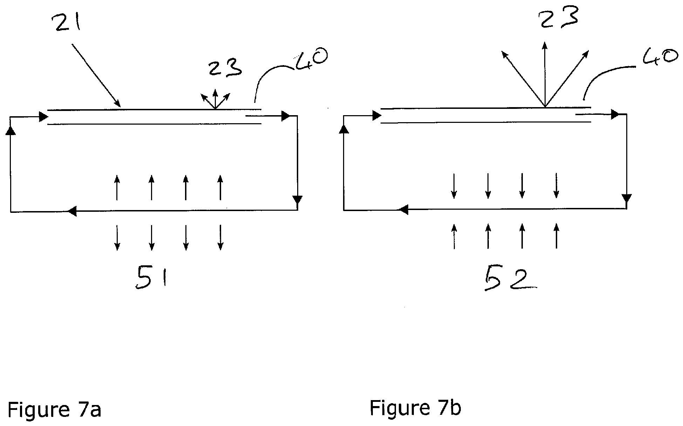

Figures 7a and 7b shows cross sections of the ground upon which the absorber is placed, and respectively the two typical use situations along with the flow of energy in the two situations, indicated by arrows. Left, where solar energy is absorbed in a circulating liquid and stored in the colder ground (typically with inflated top enclosure), and right where heat previously stored in the ground is absorbed by the circulating liquid and emitted to the colder air by the solar absorber with an evacuated top enclosure.

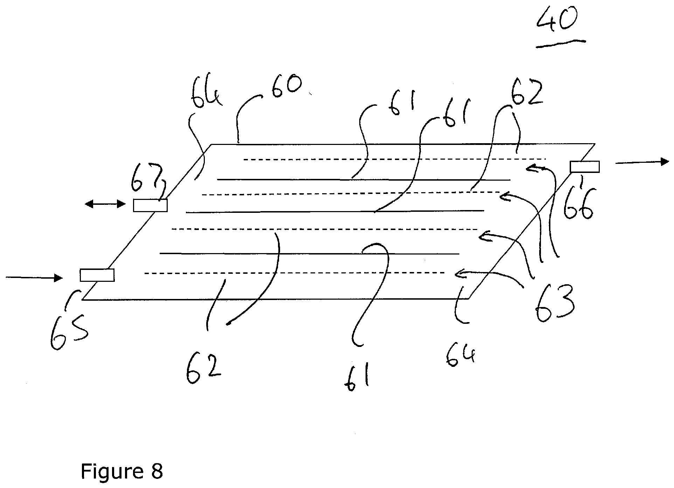

Figure 8 shows a plan view of the absorber from the top, showing the joins between layers (also shown in the cross sectional view of Figure 4). Joins 61 between the middle layers 31,32 extend around the periphery of the device as well as extending in generally parallel lines along the device between an inlet 65 and outlet 66 to form a fluid passageway 33 comprising plural generally parallel channels 63 with a manifold 64 at each end to which the inlet 65 and outlet 66 are connected. The broken lines show the position of the joins 62 between the upper layer 41 and middle layer 31 forming the upper enclosure 42 (a similar arrangement is used for joins between the lower layer 43 and middle layer 32 forming the lower enclosure 44). The joins 62 extend around the periphery of the device as well as extending in parallel lines along the device to form an enclosure 42 comprising plural chambers 62 in fluid communication with a port 67 through which gas can be filled and evacuated from the enclosure 42.

Other arrangements of join lines between the layers can be used. For instance, the channels 63 within the device can be separate, having their own inlets and outlets, where an external manifold is used to connect the inlets/outlets to a pump. For instance, a labyrinthine path can be used between the inlet 65 and outlet 66 and/or for the upper and/or lower enclosure, instead of parallel channels. More than one passageway and/or enclosure can be used in the device, having their own individual inlet/outlet/ports. The port 67 may be in communication with both the lower and upper enclosures 42, 44 such that they can both be filled with gas/evacuated simultaneously. Alternatively, separate ports can be provided for the lower and upper enclosures 42,44 so that they can be independently filled and evacuated, e.g. by separate pumps, or by using a controllable valve which controls which of the enclosures is inflated/evacuated.

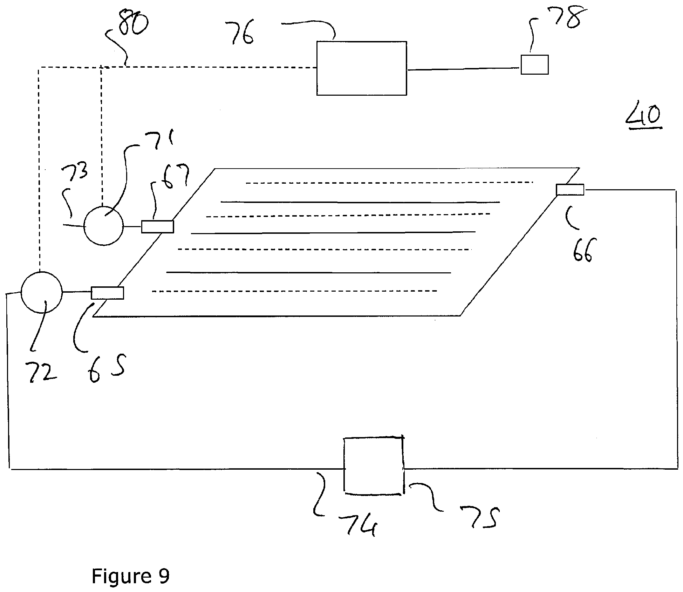

Figure 9 shows a schematic diagram of the solar absorber 40 in use. A pump 71 is connected to the port 67 such that gas, e.g. air from the atmosphere 73 can be pumped into the upper and lower enclosures 42,44. A second pump 72 is arranged to pump liquid between the inlet 65 and outlet 66 of the solar absorber via tubing 74 such that liquid can circulate in the solar absorber. The tubing 74 is buried in the ground so that heat is transferred from the circulating liquid to the ground. A control system 76 is arranged to control the pumps via connections 80. A sensor 78 may be used to monitor the environment to determine when to adjust the mode of operation, e.g. by adjusting the level of inflation of the upper and/or lower enclosure by controlling pump 71, and/or by adjusting the rate of liquid circulation via pump 72. For instance, this can be triggered by temperature changes. Thus, if the ambient temperature falls below a predetermined level, indicating the risk of frost, the control system 76 can adapt the system by evacuating the upper enclosure 42 to increase heat radiation. Alternatively, the control system may control the system according to time of day or year, or for manual control, or remote control. The control system and/or pumps may be driven by a photovoltaic panel (not shown) and/or battery storage to store energy from the panel for periods when there is insufficient solar energy generation, so as not to need an external mains electricity supply.

If desired, a storage tank 75 or other device may be connected in line with the tubing 74 to store a volume of the circulating liquid and so increase heat storage capacity. The tank 75 may for instance be buried in the ground or otherwise insulated against heat loss. If desired, a heater (not shown) may be introduced to heat the circulating liquid for periods where the solar radiation is insufficient to heat the liquid to the desired temperature. The control system 76 may be connected to further sensors for monitoring the temperature of the fluid and for controlling the heater to maintain a desired temperature.

In one example of an application, a polymer foil is nanoextruded to form a surface nanostructure with height (Rz) of 400 nm, distance between structures in the foil plane of 280 nm and a continuously increasing filling factor. The polymer foil is coated with 50 nm of conformal aluminum coating by roll-to-roll evaporation of aluminum.

The first polymer foil is line-welded using ultrasonic welding to a smooth polymer foil with 50 nm of aluminum facing away from the first said foil, thus forming an enclosure where a liquid can circulate. An upper layer foil with index gradient anti-reflective nanostructures are line-glued to the top side of the wavelength selective foil, forming an upper enclosure, and a lower layer foil is line glued to the lower side of the smooth polymer foil with 50 nm aluminum.

The end of the solar absorber is connected to a manifold in order to allow external access to the individual enclosures, and the solar absorber is placed on the ground at an airport, next to the runway. The manifold is connected to a pump allowing the circulation of water in the middle enclosure, as well as to a pump that can inflate both the upper and lower layer, as well as evacuate the upper layer. The circulating water is further circulated through a tube, e.g. a PEX tube, dug down in the ground, before entering the opposite manifold.

During sunshine, the upper enclosure is inflated, reducing thermal losses from the absorber greatly, and the heated circulating water deposits most of the absorbed heat from the sun in the ground, thus heating the volume around the PEX-tube to around 40C over the summer. During cold and moist conditions in the fall, winter or spring where the risk of fog exists, the upper enclosure is evacuated and liquid at the temperature of the ground is circulated. Heat is emitted from the hotter liquid to the colder ambient air, thus preventing or dispersing the fog. After circulating through the solar absorber, the circulating liquid passes through the PEX tube and is thus re-heated to the temperature of the ground.

In a second example of an application, a polymer foil is nanoextruded to form a surface nanostructure with Rz of 350 nm, distance between structures in the foil plane of 200 nm and a continuously increasing filling factor. The polymer foil is coated with 75 nm of conformal aluminum coating by roll-to-roll sputtering of aluminum.

The first polymer foil is line-welded using heat contact welding to a smooth polymer foil with 50 nm of aluminum facing away from the first said foil, thus forming an enclosure where a liquid can circulate. An upper layer foil with index gradient anti-reflective nanostructures are line-glued to the top side of the wavelength selective foil, forming an upper enclosure, and a lower layer foil is line glued to the lower side of the smooth polymer foil with 50 nm aluminum.

The end of the solar absorber is connected to a manifold in order to allow external access to the individual enclosures, and the solar absorber is placed on the ground below a row of apple trees. The manifold is connected to a pump allowing the circulation of water in the middle enclosure, as well as to a pump that can inflate both the upper and lower layer, as well as evacuate the upper layer. The circulating water is further circulated through a tube connected to a 100 m3 insulated water storage tank, before entering the opposite manifold.

During sunshine, the upper enclosure is inflated, reducing thermal losses from the absorber greatly, and the heated circulating water is deposited in the water storage tank at an average temperature of 50C. During clear night in the spring where the flowers of the apple trees are most sensitive to frost, the upper enclosure is evacuated and liquid from the water tank is circulated. Heat is emitted from the hotter liquid to the colder ambient air, thus preventing sub-zero temperatures. After circulating through the solar absorber, the circulating liquid is stored at a lower temperature in the storage tank. If needed during extended periods of low temperatures, the water in the storage tank can be additionally heated by external sources, e.g. by electrical heating.

In other examples, the solar absorber can be used to reduce formation of mildew and mould and the like by causing air movement in the vicinity of the solar absorber via convection currents arising from the emitted thermal radiation.

The solar absorber can be used in green houses or other buildings which permit light to enter, or on the exterior roof or façade of a building. In examples, the solar absorber can be arranged to evacuate air from the lower enclosure such that heat is released downwards, i.e. in the opposite direction from the solar radiation incident on the upper surface of the device. In such examples, the anchoring layer 45 may be omitted from the solar absorber to allow the lower layer to deflate and radiate heat downwards. This may make the solar absorber suitable for applications where it is desired to heat the ground or surface on which the solar absorber is placed. For instance, the solar absorber could be installed on a roof, such that stored heat is radiated downwards into the building.

Although the present invention has been described in connection with the specified embodiments, it should not be construed as being in any way limited to the presented examples. The scope of the present invention is set out by the accompanying claim set. In the context of the claims, the terms "comprising" or "comprises" do not exclude other possible elements or steps. Also, the mentioning of references such as "a" or "an" etc. should not be construed as excluding a plurality. The use of reference signs in the claims with respect to elements indicated in the figures shall also not be construed as limiting the scope of the invention. Furthermore, individual features mentioned in different claims, may possibly be advantageously combined, and the mentioning of these features in different claims does not exclude that a combination of features is not possible and advantageous.

All patent and non-patent references cited in the present application are also hereby incorporated by reference in their entirety.

### REFERENCES

[1] Micro- and Nanostructured Surfaces for Selective Solar Absorption, Advanced optical materials, 2015, 3, 852-881

## Claims

1. A solar thermal absorber (40) through which a heat transfer fluid can circulate to be heated by solar radiation (21) incident on an upper surface of the absorber, the absorber (40) comprising overlying layers of flexible foil (41,31,32,43) sealingly joined together at joins (61,62) to form plural enclosures (42,33) between respective co-joined layers,
wherein a first enclosure (33) provides a passageway for a heat transfer fluid to circulate, and
wherein a second enclosure (42) is capable of being selectively filled with a gas, the second enclosure being above and overlying the first enclosure (33) such that solar radiation passes through the second enclosure to reach the upper layer forming the fluid passageway,
wherein the second enclosure (42) is capable of being at least partly evacuated of the gas, thus increasing the convective heat transfer between the circulating fluid and the ambient surroundings,
wherein the upper layer (31) forming the fluid passageway comprises a wavelength selective flexible foil (10) comprising:
a polymer layer (12) with a surface nanostructure; and
a metal layer (11) conformally coating the surface nanostructure of said polymer layer and facing away from the fluid passageway,
such that the absorption coefficient varies with the wavelength, having relatively high absorption coefficient in the visible and NIR spectrum and relatively low absorption coefficient in the FIR spectrum.

2. A solar thermal absorber according to claim 1, wherein a third enclosure (44) is capable of being filled with gas, the third enclosure overlying and being below the first enclosure, where the third enclosure is capable of being at least partly evacuated of the gas, thus increasing the convective heat transfer between the said circulating fluid and the ambient surroundings.

3. A solar thermal absorber according to any of claims 1 to 2, wherein a further enclosure (45) is provided at the bottom of the solar thermal absorber capable of being filled with liquid to anchor the solar thermal absorber in use.

4. A solar thermal absorber according to any preceding claim, capable of being folded by way of the flexible foil layers for storage or transportation when not in use.

5. A solar thermal absorber (40) according to any preceding claim, where the said nanostructures have a characteristic length in the layer directions of less than 1000 nm, more preferably less than 600 nm, more preferably less than 500 nm, even more preferably less than 400 nm and most preferably less than 300 nm, and a height between 50 and 1000 nm, more preferably between 100 and 500, and most preferably between 200 and 400 nm, and a filling factor from the top of the structures to the bottom that increases continuously from 0 to 1 and/or the metal layer comprises aluminium which preferably has a thickness of less than 100 nm, more preferably less than 75 nm and most preferably less than 50 nm.

6. A solar thermal absorber according to according to any preceding claim, where the said nanostructures have an aspect ratio above 0.5, more preferably more than 0.75 and most preferably above 1.

7. A solar thermal absorber according to any preceding claim, where the said polymer layer comprises first polymer layer comprising a carrier foil of a flexible, non-elastic polymer and a second polymer layer, comprising a nanostructured flexible, elastic and semi crystalline polymer, and optionally wherein
the said first polymer layer is coated with the second polymer layer using extrusion coating.

8. A solar thermal absorber according to any preceding claim, comprising an inlet (65) and an outlet (66) in communication with the fluid passageway by which a fluid can be made to circulate through the fluid passageway, and a port (67) for filling the second enclosure with gas, and comprising a first pump (72) for circulating fluid in the fluid passageway and a second pump (73) for controllably filling or evacuating the second enclosure with gas.

9. A solar thermal absorber according to claim 8, comprising a sensor and control system (76), the control system being arranged to detect a condition in which it is desired to store thermal energy and in response to cause the first pump to circulate fluid and second pump to fill the second enclosure with gas.

10. A method of absorbing energy from sunlight **characterized by** using a solar thermal absorber according to any of claims 1 to 9, **characterized by** the circulating fluid being water or an aqueous solution, the gas being air, and at least part of the absorbed energy in the said sunlight absorbed by said circulating fluid being deposited in the ground.

11. A method of heating a volume of air by use of a solar thermal absorber according to any of claims 1 to 9, **characterized by** the first enclosure being filled with circulating fluid at an inlet temperature higher than the ambient temperature, and the second enclosure being evacuated, thus being in thermal contact with the first enclosure comprising the circulating fluid.

12. A method for prevention or dispersion of fog using the solar thermal absorber of any of claims 1 to 9, **characterized by** the following steps:
deploying the solar thermal absorber;
during sunlight, using said deployed solar thermal absorber to absorb energy during sunlight and store at least part of this energy in a thermal storage; and
during periods with fog or risk thereof, at least partly evacuating the second layer of gas and then circulating a fluid through the thermal storage reaching a temperature higher than the ambient air temperature and subsequently through the deployed solar thermal absorber, and, wherein the said second layer of said solar thermal absorber is at least partly evacuated of gas prior to the step of circulating a fluid through the energy storage.

13. A method for prevention of ice formation or ice or snow removal **characterized by** using a solar thermal absorber comprising a wavelength selective flexible foil according to any of claims 1 to 9, **characterized by** the circulating fluid being water or an aqueous solution, the gas being air, and at least part of the absorbed energy in the said sunlight absorbed by said circulating fluid being deposited in the ground on top of which the formation of ice or snow is to be prevented, by heating the surface of the ground, thus melting the said snow or ice.

14. A method for prevention of frost damage to crops or plants and/or preventing mildew or mould formation, **characterized by** using a solar thermal absorber comprising a wavelength selective flexible foil according to any of claims 1 to 9, wherein at least part of the sunlight absorbed energy in the circulating fluid is deposited in the ground, and subsequently upon the need for preventing said frost damage or mildew or mould formation, circulating fluid from the ground at a higher temperature to the said solar thermal absorber present in a lower temperature ambient surrounding, thereby heating the ambient surrounding adequately through means of combined heat convention and thermal radiation to prevent frost damage or mildew or mould formation.

15. A method of manufacturing a solar thermal absorber through which a heat transfer fluid can circulate to be heated by solar radiation incident on an upper surface of the absorber, the method comprising:
forming joins between overlying layers of flexible foil to form plural enclosures between respective co-joined layers,
wherein a first enclosure provides a passageway for a heat transfer fluid to circulate, and
wherein a second enclosure is capable of being selectively filled with a gas, the second enclosure being above and overlying the first enclosure such that solar radiation passes through the second enclosure to reach the upper layer forming the fluid passageway, wherein the second enclosure is capable of being at least partly evacuated of the gas, thus increasing the convective heat transfer between the said circulating fluid and the ambient surroundings,
wherein the upper layer forming the fluid passageway comprises a wavelength selective flexible foil comprising:
a polymer layer with a surface nanostructure;
a metal layer conformally coating the surface nanostructure of said polymer layer and facing away from the fluid passageway,
such that the absorption coefficient varies with the wavelength, having relatively high absorption coefficient in the visible and NIR spectrum and relatively low absorption coefficient in the FIR spectrum.

## Patentansprüche

1. Solarthermischer Absorber (40), durch den ein Wärmeübertragungsfluid zirkulieren kann, um durch auf eine obere Oberfläche des Absorbers einfallende Sonnenstrahlung (21) erwärmt zu werden, wobei der Absorber (40) übereinander liegende Schichten flexibler Folie (41, 31, 32, 43) umfasst, die an Verknüpfungsstellen (61, 62) abdichtend miteinander verknüpft sind, um mehrere Gehäuse (42, 33) zwischen entsprechenden miteinander verknüpften Schichten zu bilden,
wobei ein erstes Gehäuse (33) einen Durchgang für ein zirkulierendes Wärmeübertragungsfluid bereitstellt, und
wobei ein zweites Gehäuse (42) in der Lage ist, mit einem Gas selektiv gefüllt zu werden, wobei das zweite Gehäuse oberhalb und über dem ersten Gehäuse (33) liegend ist, derart, dass Sonnenstrahlung durch das zweite Gehäuse tritt, um die obere Schicht zu erreichen, die den Fluiddurchgang bildet,
wobei das zweite Gehäuse (42) in der Lage ist, wenigstens teilweise von Gas evakuiert zu werden, wodurch die konvektive Wärmeübertragung zwischen dem zirkulierenden Fluid und der umgebenden Umgebung erhöht wird,
wobei die obere Schicht (31), die den Fluiddurchgang bildet, eine wellenlängenselektive flexible Folie (10) umfasst, die Folgendes umfasst:
eine Polymerschicht (12) mit einer Oberflächennanostruktur; und
eine Metallschicht (11), die die Oberflächennanostruktur der Polymerschicht konform beschichtet und von dem Fluiddurchgang abgewandt ist,
derart dass der Absorptionskoeffizient mit der Wellenlänge variiert, mit einem relativ hohen Absorptionskoeffizienten in dem sichtbaren und NIR-Spektrum und einem relativ niedrigen Absorptionskoeffizienten in dem FIR-Spektrum.

2. Solarthermischer Absorber nach Anspruch 1, wobei ein drittes Gehäuse (44) in der Lage ist, mit Gas gefüllt zu werden, wobei das dritte Gehäuse übereinander und unter dem ersten Gehäuse liegt, wobei das dritte Gehäuse in der Lage ist, wenigstens teilweise von Gas evakuiert zu werden, wodurch die konvektive Wärmeübertragung zwischen dem zirkulierenden Fluid und der umgebenden Umgebung erhöht wird.

3. Solarthermischer Absorber nach einem der Ansprüche 1 bis 2, wobei ein weiteres Gehäuse (45) an dem Boden des solarthermischen Absorbers bereitgestellt ist, das in der Lage ist, mit Flüssigkeit gefüllt zu werden, um den solarthermischen Absorber in Verwendung zu verankern.

4. Solarthermischer Absorber nach einem der vorhergehenden Ansprüche, der, wenn nicht in Verwendung, mittels der flexiblen Folienschichten für eine Lagerung oder einen Transport gefaltet werden kann.

5. Solarthermischer Absorber (40) nach einem der vorhergehenden Ansprüche, wobei die Nanostrukturen eine charakteristische Länge in den Schichtrichtungen von weniger als 1000 nm, stärker bevorzugt weniger als 600 nm, stärker bevorzugt weniger als 500 nm, noch stärker bevorzugt weniger als 400 nm und am stärksten bevorzugt weniger als 300 nm und eine Höhe zwischen 50 und 1000 nm, stärker bevorzugt zwischen 100 und 500 und am stärksten bevorzugt zwischen 200 und 400 nm, und einen Füllfaktor von der Oberseite der Strukturen zu dem Boden aufweisen, der von 0 bis 1 fortlaufend zunimmt und/oder die Metallschicht Aluminium umfasst, das bevorzugt eine Dicke von weniger als 100 nm, stärker bevorzugt weniger als 75 nm und am stärksten bevorzugt weniger als 50 nm aufweist.

6. Solarthermischer Absorber nach einem der vorhergehenden Ansprüche, wobei die Nanostrukturen ein Seitenverhältnis von über 0,5, stärker bevorzugt mehr als 0,75 und am stärksten bevorzugt über 1 aufweisen.

7. Solarthermischer Absorber nach einem der vorhergehenden Ansprüche, wobei die Polymerschicht eine erste Polymerschicht, die eine Trägerfolie aus einem flexiblen, nicht elastischen Polymer umfasst, und eine zweite Polymerschicht umfasst, die ein nanostrukturiertes flexibles, elastisches und halbkristallines Polymer umfasst, und optional wobei
die erste Polymerschicht mit der zweiten Polymerschicht unter Verwendung von Extrusionsbeschichten beschichtet wird.

8. Solarthermischer Absorber nach einem der vorhergehenden Ansprüche, der einen Einlass (65) und einen Auslass (66) in Verbindung mit dem Fluiddurchgang, durch den ein Fluid dazu gebracht werden kann, durch den Fluiddurchgang zu zirkulieren, und eine Öffnung (67) zum Füllen des zweiten Gehäuses mit Gas umfasst und eine erste Pumpe (72) zum Zirkulieren von Fluid in dem Fluiddurchgang und eine zweite Pumpe (73) zum steuerbaren Füllen oder Evakuieren des zweiten Gehäuses mit Gas umfasst.

9. Solarthermischer Absorber nach Anspruch 8, der ein Sensor- und Steuersystem (76) umfasst, wobei das Steuersystem angeordnet ist, um einen Zustand zu erfassen, in dem es erwünscht ist, thermische Energie zu speichern, und als Reaktion darauf bewirkt, dass die erste Pumpe Fluid zirkuliert und die zweite Pumpe das zweite Gehäuse mit Gas füllt.

10. Verfahren zum Absorbieren von Energie aus Sonnenlicht, **gekennzeichnet durch** das Verwenden eines solarthermischen Absorbers nach einem der Ansprüche 1 bis 9, **dadurch gekennzeichnet, dass** das zirkulierende Fluid Wasser oder eine wässrige Lösung ist, das Gas Luft ist und wenigstens Teil der absorbierten Energie in dem Sonnenlicht, das durch das zirkulierende Fluid absorbiert wird, in dem Boden abgeschieden wird.

11. Verfahren zum Erwärmen eines Luftvolumens durch Verwendung eines solarthermischen Absorbers nach einem der Ansprüche 1 bis 9, **dadurch gekennzeichnet, dass** das erste Gehäuse mit zirkulierendem Fluid bei einer Einlasstemperatur gefüllt ist, die höher als die umgebende Temperatur ist, und das zweite Gehäuse evakuiert ist, wodurch es in thermischem Kontakt mit dem ersten Gehäuse steht, das das zirkulierende Fluid umfasst.

12. Verfahren für eine Verhinderung oder Zerstreuung von Nebel unter Verwendung des solarthermischen Absorbers nach einem der Ansprüche 1 bis 9, **gekennzeichnet durch** die folgenden Schritte:
Einsetzen des solarthermischen Absorbers;
während Sonnenlicht, Verwenden des eingesetzten solarthermischen Absorbers, um Energie während Sonnenlicht zu absorbieren und wenigstens Teil dieser Energie in einem thermischen Speicher zu speichern; und
während Perioden mit Nebel oder Gefahr davon, wenigstens teilweises Evakuieren der zweiten Gasschicht und dann Zirkulieren eines Fluids durch den thermischen Speicher, der eine Temperatur erreicht, die höher als die umgebende Lufttemperatur ist, und anschließend durch den eingesetzten solarthermischen Absorber, und wobei die zweite Schicht des solarthermischen Absorbers vor dem Schritt des Zirkulierens eines Fluids durch den Energiespeicher wenigstens teilweise von Gas evakuiert wird.

13. Verfahren für die Verhinderung von Eisbildung oder für eine Entfernung von Eis oder Schnee, **gekennzeichnet durch** die Verwendung eines solarthermischen Absorbers, der eine wellenlängenselektive flexible Folie nach einem der Ansprüche 1 bis 9 umfasst, **dadurch gekennzeichnet, dass** das zirkulierende Fluid Wasser oder eine wässrige Lösung ist, das Gas Luft ist und wenigstens Teil der absorbierten Energie in dem Sonnenlicht, das durch das zirkulierende Fluid absorbiert wird, in dem Boden abgeschieden wird, auf dem die Bildung von Eis oder Schnee durch Erwärmen der Oberfläche des Bodens verhindert werden soll, wodurch der Schnee oder das Eis schmilzt.

14. Verfahren für die Verhinderung von Frostschäden an Erntegut oder Pflanzen und/oder für das Verhindern von Mehltau oder Schimmelbildung, **gekennzeichnet durch** die Verwendung eines solarthermischen Absorbers, der eine wellenlängenselektive flexible Folie nach einem der Ansprüche 1 bis 9 umfasst, wobei wenigstens Teil der sonnenlichtabsorbierten Energie in dem zirkulierenden Fluid in dem Boden abgeschieden wird, und anschließend bei der Notwendigkeit des Verhinderns des Frostschadens oder der Mehltau- oder Schimmelbildung, Zirkulieren von Fluid von dem Boden bei einer höheren Temperatur zu dem solarthermischen Absorber, der in einer umgebenden Umgebung mit niedrigerer Temperatur vorhanden ist, wobei dadurch die umgebende Umgebung durch kombinierte Wärmekonvektion und thermische Strahlung ausreichend erwärmt wird, um Frostschäden oder Mehltau- oder Schimmelbildung zu vermeiden.

15. Verfahren zum Herstellen eines solarthermischen Absorbers, durch den ein Wärmeübertragungsfluid zirkulieren kann, um durch auf eine obere Oberfläche des Absorbers einfallende Sonnenstrahlung erwärmt zu werden, wobei das Verfahren Folgendes umfasst:
Bilden von Verknüpfungen zwischen übereinander liegenden Schichten aus flexibler Folie, um mehrere Gehäuse zwischen entsprechenden miteinander verknüpften Schichten zu bilden,
wobei ein erstes Gehäuse einen Durchgang für ein zirkulierendes Wärmeübertragungsfluid bereitstellt, und
wobei ein zweites Gehäuse in der Lage ist, mit einem Gas selektiv gefüllt zu werden, wobei das zweite Gehäuse oberhalb und über dem ersten Gehäuse liegend ist, derart, dass Sonnenstrahlung durch das zweite Gehäuse tritt, um die obere Schicht zu erreichen, die den Fluiddurchgang bildet, wobei das zweite Gehäuse in der Lage ist, wenigstens teilweise von Gas evakuiert zu werden, wodurch die konvektive Wärmeübertragung zwischen dem zirkulierenden Fluid und der umgebenden Umgebung erhöht wird,
wobei die obere Schicht, die den Fluiddurchgang bildet, eine wellenlängenselektive flexible Folie umfasst, die Folgendes umfasst:
eine Polymerschicht mit einer Oberflächennanostruktur;
eine Metallschicht, die die Oberflächennanostruktur der Polymerschicht konform beschichtet und von dem Fluiddurchgang abgewandt ist,
derart dass der Absorptionskoeffizient mit der Wellenlänge variiert, mit einem relativ hohen Absorptionskoeffizienten in dem sichtbaren und NIR-Spektrum und einem relativ niedrigen Absorptionskoeffizienten in dem FIR-Spektrum.

## Revendications

1. Absorbeur thermique solaire (40) à travers lequel un fluide caloporteur peut circuler pour être chauffé par un rayonnement solaire (21) incident sur une surface supérieure de l'absorbeur, l'absorbeur (40) comprenant des couches superposées de feuilles souples (41, 31, 32, 43) assemblées ensemble de manière étanche au niveau de jonctions (61, 62) pour former plusieurs enceintes (42, 33) entre des couches co-assemblées respectives,
une première enceinte (33) fournissant un passage pour la circulation d'un fluide caloporteur, et
une deuxième enceinte (42) pouvant être sélectivement remplie d'un gaz, la deuxième enceinte étant au-dessus de et recouvrant la première enceinte (33) de sorte que le rayonnement solaire traverse la deuxième enceinte pour atteindre la couche supérieure formant le passage de fluide,
la deuxième enceinte (42) pouvant être au moins partiellement vidée du gaz, augmentant ainsi le transfert de chaleur par convection entre le fluide en circulation et l'environnement ambiant,
la couche supérieure (31) formant le passage de fluide comprenant une feuille souple sélective en longueur d'onde (10) comprenant :
une couche polymère (12) avec une nanostructure de surface ; et
une couche métallique (11) revêtant de manière conforme la nanostructure de surface de ladite couche polymère et étant tournée à l'opposé du passage de fluide,
de sorte que le coefficient d'absorption varie avec la longueur d'onde, ayant un coefficient d'absorption relativement élevé dans les spectres visible et NIR et un coefficient d'absorption relativement faible dans le spectre FIR.

2. Absorbeur thermique solaire selon la revendication 1, dans lequel une troisième enceinte (44) peut être remplie de gaz, la troisième enceinte recouvrant et étant en dessous de la première enceinte, la troisième enceinte pouvant être au moins partiellement vidée du gaz, augmentant ainsi le transfert thermique par convection entre ledit fluide en circulation et l'environnement ambiant.

3. Absorbeur thermique solaire selon l'une quelconque des revendications 1 à 2, dans lequel une autre enceinte (45) est fournie au fond de l'absorbeur thermique solaire pouvant être remplie de liquide pour ancrer l'absorbeur thermique solaire lorsqu'il est utilisé.

4. Absorbeur thermique solaire selon l'une quelconque des revendications précédentes, pouvant être plié au moyen des couches de feuilles souples pour le stockage ou le transport lorsqu'il n'est pas utilisé.

5. Absorbeur thermique solaire (40) selon l'une quelconque des revendications précédentes, dans lequel lesdites nanostructures ont une longueur caractéristique dans les directions de couche inférieure à 1 000 nm, plus préférablement inférieure à 600 nm, plus préférablement inférieure à 500 nm, encore plus préférablement inférieure à 400 nm et le plus préférablement inférieure à 300 nm, et une hauteur comprise entre 50 et 1 000 nm, plus préférablement entre 100 et 500, et le plus préférablement entre 200 et 400 nm, et un facteur de remplissage du haut des structures vers le bas qui augmente en continu de 0 à 1 et/ou la couche métallique comprend de l'aluminium qui a de préférence une épaisseur inférieure à 100 nm, plus préférablement inférieure à 75 nm et le plus préférablement inférieure à 50 nm.

6. Absorbeur thermique solaire selon l'une quelconque des revendications précédentes, dans lequel lesdites nanostructures ont un rapport d'aspect supérieur à 0,5, plus préférablement supérieur à 0,75 et le plus préférablement supérieur à 1.

7. Absorbeur thermique solaire selon l'une quelconque des revendications précédentes, dans lequel ladite couche polymère comprend une première couche polymère comprenant une feuille de support d'un polymère flexible non élastique et une seconde couche polymère comprenant un polymère flexible, élastique et semi-cristallin nanostructuré, et éventuellement
ladite première couche polymère étant revêtue de la seconde couche polymère à l'aide d'un revêtement par extrusion.

8. Absorbeur thermique solaire selon l'une quelconque des revendications précédentes, comprenant une entrée (65) et une sortie (66) en communication avec le passage de fluide par lesquelles un fluide peut être amené à circuler à travers le passage de fluide, et un orifice (67) destiné à remplir la deuxième enceinte avec du gaz, et comprenant une première pompe (72) destinée à faire circuler du fluide dans le passage de fluide et une seconde pompe (73) destinée à remplir ou à vider de manière commandée la deuxième enceinte avec du gaz.

9. Absorbeur thermique solaire selon la revendication 8, comprenant un capteur et un système de commande (76), le système de commande étant agencé pour détecter une condition dans laquelle il est souhaitable de stocker de l'énergie thermique et en réponse pour amener la première pompe à faire circuler du fluide et la seconde pompe à remplir la deuxième enceinte avec du gaz.

10. Procédé d'absorption d'énergie provenant de l'ensoleillement, **caractérisé par** l'utilisation d'un absorbeur thermique solaire selon l'une quelconque des revendications 1 à 9, **caractérisé en ce que** le fluide en circulation est de l'eau ou une solution aqueuse, le gaz est de l'air, et au moins une partie de l'énergie absorbée dans ledit ensoleillement absorbé par ledit fluide en circulation est déposée dans le sol.

11. Procédé de chauffage d'un volume d'air à l'aide d'un absorbeur thermique solaire selon l'une quelconque des revendications 1 à 9, **caractérisé en ce que** la première enceinte est remplie d'un fluide en circulation à une température d'entrée supérieure à la température ambiante, et la deuxième enceinte est vidée, étant ainsi en contact thermique avec la première enceinte comprenant le fluide en circulation.

12. Procédé destiné à la prévention ou à la dispersion de brouillard à l'aide de l'absorbeur thermique solaire selon l'une quelconque des revendications 1 à 9, **caractérisé par** les étapes suivantes :
déploiement de l'absorbeur thermique solaire ;
pendant l'ensoleillement, utilisation dudit absorbeur thermique solaire déployé pour absorber de l'énergie pendant l'ensoleillement et stocker au moins une partie de cette énergie dans un stockage thermique ; et
pendant des périodes de brouillard ou de risque de brouillard, le fait de vider au moins partiellement la seconde couche de gaz puis la mise en circulation d'un fluide à travers le stockage thermique atteignant une température supérieure à la température d'air ambiant et ensuite à travers l'absorbeur thermique solaire déployé, et, ladite seconde couche dudit absorbeur thermique solaire étant au moins partiellement vidée de gaz avant l'étape de mise en circulation d'un fluide à travers le stockage d'énergie.

13. Procédé destiné à la prévention de formation de glace ou à l'enlèvement de glace ou de neige **caractérisé par** l'utilisation d'un absorbeur thermique solaire comprenant une feuille souple sélective en longueur d'onde selon l'une quelconque des revendications 1 à 9, **caractérisé en ce que** le fluide en circulation est de l'eau ou une solution aqueuse, le gaz est de l'air, et au moins une partie de l'énergie absorbée dans ledit ensoleillement absorbé par ledit fluide en circulation est déposée dans le sol au-dessus duquel la formation de glace ou de neige doit être empêchée, en chauffant la surface du sol, faisant ainsi fondre ladite neige ou glace.

14. Procédé destiné à la prévention de dommages causés par le gel aux récoltes ou aux plantes et/ou à la prévention de moisissures ou de formation de moisissures, **caractérisé par** l'utilisation d'un absorbeur thermique solaire comprenant une feuille souple sélective en longueur d'onde selon l'une quelconque des revendications 1 à 9, dans lequel au moins une partie de l'énergie absorbée lors de l'ensoleillement dans le fluide en circulation est déposée dans le sol, et ensuite, en cas de besoin de prévention desdits dommages causés par le gel ou de moisissures ou de formation de moisissures, du fluide est mis en circulation depuis le sol à une température plus élevée vers ledit absorbeur thermique solaire présent dans un environnement ambiant à température plus basse, chauffant ainsi l'environnement ambiant de manière adéquate au moyen de la convention de chaleur et du rayonnement thermique combinés pour empêcher des dommages causés par le gel ou des moisissures ou la formation de moisissures.

15. Procédé de fabrication d'un absorbeur thermique solaire à travers lequel un fluide caloporteur peut circuler pour être chauffé par un rayonnement solaire incident sur une surface supérieure de l'absorbeur, le procédé comprenant :
la formation de jonctions entre des couches superposées de feuilles souples pour former plusieurs enceintes entre des couches co-assemblées respectives,
une première enceinte fournissant un passage pour la circulation d'un fluide caloporteur, et
une deuxième enceinte pouvant être sélectivement remplie d'un gaz, la deuxième enceinte étant au-dessus de et recouvrant la première enceinte de sorte que le rayonnement solaire traverse la deuxième enceinte pour atteindre la couche supérieure formant le passage de fluide, la deuxième enceinte pouvant être au moins partiellement vidée du gaz, augmentant ainsi le transfert de chaleur par convection entre ledit fluide en circulation et l'environnement ambiant,
la couche supérieure formant le passage de fluide comprenant une feuille souple sélective en longueur d'onde comprenant :
une couche polymère avec une nanostructure de surface ;
une couche métallique revêtant de manière conforme la nanostructure de surface de ladite couche polymère et étant tournée à l'opposé du passage de fluide,
de sorte que le coefficient d'absorption varie avec la longueur d'onde, ayant un coefficient d'absorption relativement élevé dans les spectres visible et NIR et un coefficient d'absorption relativement faible dans le spectre FIR.
